# EUROPEAN PATENT APPLICATION

(11) **EP 2 851 180 A1**
(43) Date of publication of application: **25.03.2015**
(21) Application number: 14185510.6
(22) Date of filing: 19.09.2014
(51) Int. Cl.: B29C 67/00, B22F 3/105

(54) **Method and apparatus for forming three-dimensional articles**

(30) Priority: 20.09.2013 US 201361880529 P
(71) Applicant: Rolls-Royce Corporation, Indianapolis, Indiana 46225-1103 (US)
(72) Inventor: Shuck, Quinlan Yee, INDIANAPOLIS, IN Indiana 46220 (US); Bader, Jacque Sue, MARTINSVILLE, IN Indiana 46151 (US)
(74) Representative: Dauncey, Mark Peter

(57) **Abstract**

The present disclosure relates to a method (100) and apparatus (200) for forming a three-dimensional article (260). The method (100) includes establishing control commands (110) effective to form a threedimensional article (260) and dispensing a first layer of particulate material (120) onto a build platform (210). The method (100) also includes irradiating the first layer of particulate material with microwaves (130) and guiding a directed energy (140), according to the control commands (110), at the first layer of particulate material to form a first consolidated layer of the three-dimensional article (260).

## Description

### BACKGROUND

The present disclosure relates to the field of consolidating particulate materials into three-dimensional articles, but more specifically to the preheating of particulate materials with microwaves.

Additive manufacturing is the future of complex part manufacturing due to its ability to form very complex part models by digitally slicing the models into layers and creating the complex part one layer at a time. That is, general additive manufacturing techniques use particulate or liquid materials to form three-dimensional articles by adding layers of material on top of each other and fusing them together. In processes that use a particulate material bed, a focused energy beam is used to melt the material so that the layers form together.

As three-dimensional articles are built layer by layer through additive manufacturing, the articles retain residual stresses as a result of the extreme temperature inflection from room temperature to melting temperatures. Because of these residual stresses, there are weaknesses built into the finished articles which can lead to cracking or distortion. These defects can lead to catastrophic failure of the parts. As a result, there is a demonstrated need to improve the properties of the articles formed by additive manufacturing.

There have been a few attempts to solve this residual stress issue, such as by preheating the particulate material with resistive heaters. In short, by raising the temperature of the particulate material before use of a focused energy beam, the rapid temperature jump, which leads to the residual stress weaknesses, is avoided. However, previous attempts to preheat particulate material have failed due to unwanted heating of heat sensitive parts of the additive manufacturing machine, such as the laser galvanometer, particulate spreading mechanism, and work enclosure. Therefore, there is a need for a system and method for forming a three-dimensional article that includes preheating particulate material to diffuse retained residual stress in the article while keeping heat sensitive parts of the additive manufacturing machine relatively cool.

### SUMMARY

The present disclosure relates to a method and apparatus for forming a three-dimensional article. The method includes establishing control commands effective to form a three-dimensional article and dispensing a first layer of particulate material onto a build platform. The method also includes irradiating the first layer of particulate material with microwaves and guiding a directed energy beam, according to the control commands, at the first layer of particulate material to form a first consolidated layer of the three-dimensional article.

The present disclosure also relates to an apparatus for forming a three-dimensional article which includes a build platform and a particulate spreader configured to move horizontally relative to the build platform. The apparatus also includes a galvanometer configured to guide a directed energy beam used to form a three-dimensional article toward the build platform, and a microwave emitter positioned above the build platform, wherein the microwave emitter is configured to emit microwaves having wavelengths sufficient to couple with a particulate material.

The present disclosure also relates to an apparatus for forming a three-dimensional article which includes a build platform, a particulate spreader, a directed energy beam, and a microwave emitter.

### BRIEF DESCRIPTION OF THE DRAWINGS

FIG. 1 is an exemplary flow diagram of a method for forming a three-dimensional article according to the present disclosure.
FIG. 2 is an exemplary embodiment of an apparatus for producing a three-dimensional article according to the present disclosure.

### DETAILED DESCRIPTION

The present disclosure is directed at a method and apparatus for forming a three-dimensional article. For the purposes of promoting an understanding of the principles of the present disclosure, reference will now be made to the embodiments illustrated in the drawings and specific language will be used to describe the same. It will nevertheless be understood that no imitation of the scope of the present disclosure is intended. Any alterations and further modifications in the described embodiment, and any further applications of the principles of the present disclosure as described herein are contemplated as would normally occur to one skilled in the art to which the present disclosure relates.

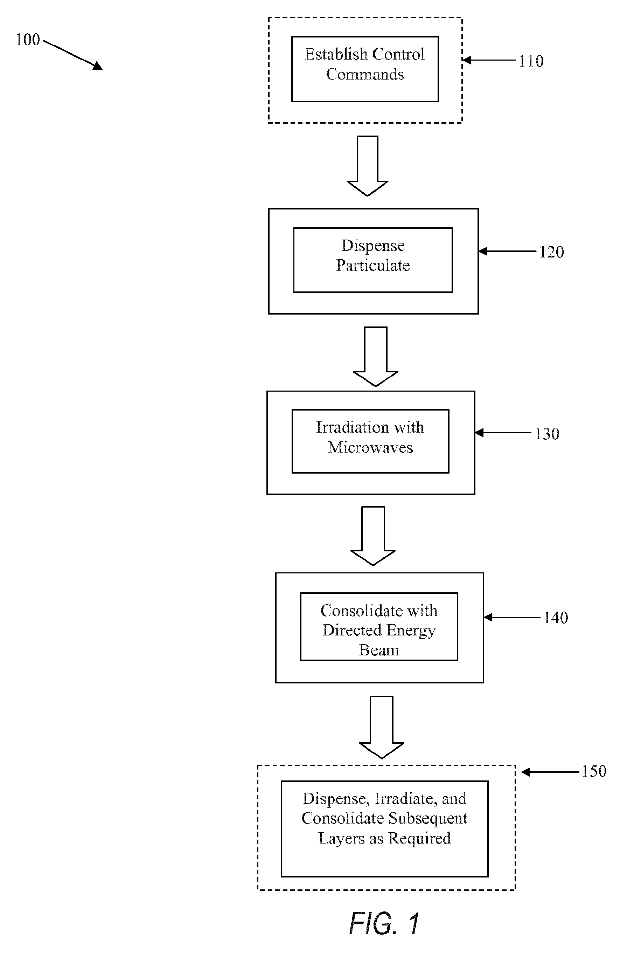

FIG. 1 shows an exemplary embodiment of a method **100** for forming a three-dimensional article according to the present disclosure. As shown in FIG. 1, the method **100** optionally includes establishing control commands **110** for forming the three-dimensional article. The step **110** may include uploading a computer aided design (CAD) three-dimensional model, receiving a CAD model, or obtaining article information in various other ways. The step **110** may also include separating three-dimensional models into parallel slices and communicating information regarding the parallel slices to the additive manufacturing apparatus, along with the instructions for controlling the layer by layer formation of the three-dimensional article. Alternatively, an additive manufacturing apparatus may already include the control commands such that the control commands are not received.

As shown in FIG. 1, the method **100** includes dispensing the particulate material onto the build platform **120.** The particulate material may be dispensed in a variety of ways including, but not limited to, depositing the material from a feeder or coating the particulate material onto the build platform, using a particulate spreader.

As shown in FIG. 1, the method **100** further includes irradiating the particulate material with microwaves **130.** In at least one, non-limiting embodiment, this step **130** may include activating a microwave emitter causing microwaves to radiate toward the build platform. The microwave radiation couples with the particulate material causing the temperature of the particulate material to rise, regardless of the type of material. The frequency range of microwaves may be various values, including, but not limited to, approximately 300 MHz to approximately 300 GHz. The size of the particulate material may be various sizes. In any event, the microwave frequency and size of particulate material are selected such that the microwaves couple with the particulate material.

Typically, when using most metallic materials, microwaves are reflected off of the surface of the material and fail to heat up the material. However, it has been found that when metallic materials are in a particulate or powdered form, microwave radiation is able to couple with the metallic material such that the metallic material is preheated prior to formation of the three-dimensional article.

Microwave heating of particles has many advantages over traditional modes of preheating material prior to an additive manufacturing process. One advantage is simplification of the apparatus for and method of heating the material. According to the present disclosure, a simple microwave emitter replaces traditional resistive or infrared heaters and the accompanying complex infrastructure needed to position such heaters. The complex infrastructure for these traditional heaters is necessary to prevent unwanted heating of heat-sensitive parts of additive manufacturing devices. Such heat-sensitive parts include laser galvanometers, particulate spreader, and the like. The use of microwave radiation eliminates the need for such complex infrastructure heat because the microwaves reflect off of the said heat-sensitive parts without causing harm or the respective parts are transparent relative to the radiation.

Another advantage of the present disclosure is cost savings by first preheating the particulate material using microwaves. Current systems use a directed energy beam to raise the temperature of the material from room temperature to sintering or melting temperature. By preheating the material with microwaves in the present disclosure, the directed energy beam is only used to raise the temperature from the preheated temperature to the sintering or melting temperature. Because the cost of using the directed energy beam is significantly higher compared to using microwave radiation, the reduction of time using the directed energy beam is a cost savings. Microwave radiation is also a quick way of heating materials compared to other heating mechanisms. For this reason, time would be saved both in the preheating stage and the overall formation stage. As noted above, the preheating of materials using microwaves results in better material properties within the article compared to processes that do not preheat material. When particulate materials are not preheated prior to sintering or melting, the quick melting by a laser beam can leave residual stresses within the article which are compounded with each layer. These compounded residual stresses can lead to part failure.

The speed at which the particulate material may be heated with microwaves is inversely related to the size and compaction of the particle. The smaller the particle the faster the particulate material is preheated, and the less compacted the particles are together when dispensed, the faster the particulate material is preheated. Therefore, small, loose particles may allow the step **120** to be achieved quickly, which may result in shorter overall production times. Microwave radiation may be further utilized to maintain the temperature of the particulate material constant throughout consolidation (described below) or to heat treat the part in situ.

With reference to FIG. 1, the method **100** further includes consolidating the particulate material with a directed energy beam **140.** The step **140** includes guiding a directed energy beam according to the control commands at the first layer of particulate material to form a first consolidated layer of the three-dimensional article. The directed energy beam causes the particulate material to at least partially melt such that the particulate material adheres together. In one, non-limiting embodiment the directed energy beam may be a laser beam. In yet another, non-limiting embodiment, the directed energy beam may be an electron beam.

As shown in FIG. 1, the method **100** may optionally include the step **150** of dispensing subsequent layers of particulate material, irradiating such additional layers with microwaves, and consolidating the particulate material with a directed energy beam until the part is complete or near completion. The step **150** may include incrementally lowering the build platform an amount equal to the subsequent layer thickness such that the subsequent layer is in position for the irradiation and consolidation steps. It should be noted that various layers of dispensed particulate material may have different thicknesses. It should also be noted that particular material may be allowed to cool to a predetermined temperature before a subsequent layer is added. In at least one embodiment, the predetermined temperature may be less than the particulate material's melting temperature. After the three-dimensional article is formed, the article may be removed from the build platform and/or separated from any residual particulate material.

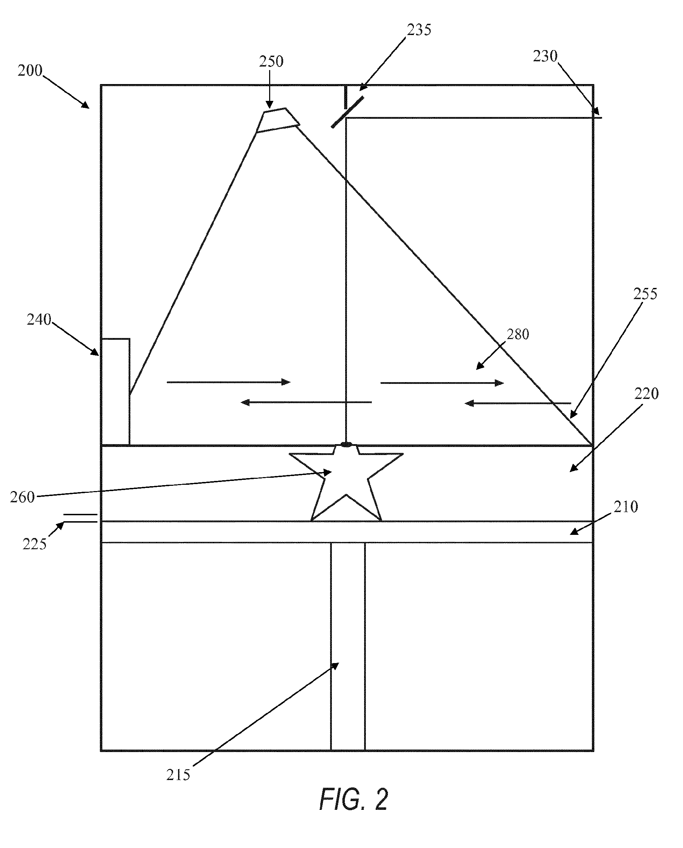

FIG. 2 illustrates one embodiment of an additive manufacturing apparatus **200** for forming a three-dimensional article according the present disclosure. FIG. 2 shows an exemplary three-dimensional article **260** in the process of being formed by the additive manufacturing apparatus **200.** The additive manufacturing apparatus **200** is configured to carry out the methods disclosed herein, including, but not limited to, method **100**. The additive manufacturing apparatus **200** of FIG. 2 includes a build platform **210,** a directed energy beam **230,** a laser galvanometer **235,** a particulate spreader **240,** and a microwave emitter 250.

The build platform **210** of the additive manufacturing apparatus **200** is a surface on which material may be laid, such as in the pattern of an article to be formed or in bulk for selective formation within a bed of the material out of which the article is to be formed. In at least one embodiment, the build platform **210** is configured to be raised or lowered, such as by means of a piston **215.** The raising and lowering of the build platform, **210** allows for material to be easily dispensed over the build platform **210.**

FIG. 2 also shows a microwave emitter **250** located above the build platform **210** and adjacent to the galvanometer **235.** In this position, the microwave emitter **250** can irradiate at least a portion of the dispensed particulate material **220** with microwave radiation **255,** while not interfering with the path of the directed energy beam **230.** It should be noted that the microwave emitter **250** may be positioned in various other positions that allow for irradiation of the particulate material **220.**

In the exemplary embodiment shown in FIG. 2, the additive manufacturing apparatus **200** is configured to melt particulate material **220** layer by layer until the article is formed according to the present disclosure. In at least one embodiment, to accomplish formation of the article, the piston **215** may lower the build platform **210** an incremental amount in view of control commands. For example, the lowering of the build platform **210** may coincide with the thickness of each slice of a CAD model. This incremental amount may allow particulate material **220** located in a particulate supply (not shown) to be dispensed over the now lowered build platform **210.** The particulate spreader **240** shown in FIG. 2 may be configured to deposit one or more layers of particulate material **220** over the build platform **210** along a path parallel to the build platform, (arrows 280). The particulate spreader **240** may include one or more of a singular wiper, a singular roller, system of multiple rollers, or a system of multiple wipers. The particulate material layer **225** may be 20 to 200 microns thick, though it is contemplated that the thickness of a particulate material layer may be inside or outside of this range. Depending on the material properties desired for the finished three-dimensional article, the particulate material **220** may be metallic, ceramic, doped plastic, or any combination thereof.

The galvanometer **235** in FIG. 2 is configured to guide a directed energy beam **230** toward the particulate material **220** that is deposited over the build platform **210.** As described above, the directed energy beam **230** may be a laser beam an electron beam, and the like. In at least one exemplary embodiment, the laser galvanometer **235** may include a mirror attached to one or more rotary actuators configured to steer the laser beam. It should be noted that a scanner system may be part of or implemented with the galvanometer **235.**

It will be apparent to those of skill in the art that variations may be applied to the method or apparatus and in the steps or in the sequence of the steps of the method described herein without departing from the concept, spirit, and scope of the present disclosure. All such similar substitutes and modifications apparent to those skilled in the art are deemed to be within the spirit, scope, and concept of the present disclosure.

## Claims

1. A method (100) for forming a three-dimensional article comprising:
a. establishing control commands (110) effective to form a three-dimensional article;
b. dispensing a first layer of particulate material onto a build platform (120);
c. irradiating the first layer of particulate material with microwaves (130); and
d. guiding a directed energy beam (140) according to control commands at the first layer of particulate material to form a first consolidated layer of the three-dimensional article.

2. The method (100) of claim 1, further comprising:
a. dispensing a second layer of particulate material over the first consolidated layer of the three-dimensional article (150);
b. irradiating the second layer of particulate material with microwaves (150); and
c. guiding the directed energy beam at the second layer of particulate material to form a second consolidated layer of the three-dimensional article (150).

3. The method (100) of claim 2, wherein the first consolidated layer cools to a predetermined temperature prior to dispensing the second layer of particulate material over the first consolidated layer of the three-dimensional article (150).

4. The method of claim 2 or 3, further comprising adding subsequent layers by dispensing additional layers of particulate material (150), irradiating each of said additional layers of particulate material with microwaves (150), and consolidating each said of additional layers of particulate materials with a directed energy beam to form the three-dimensional article (150).

5. The method (100) of any of claims 1 to 4, wherein irradiating the first layer (130) comprises heating the particulate material to a predetermined temperature sufficient to reduce residual stresses in the three-dimensional article.

6. The method (100) of any of claims 1 to 5, further comprising modulating the microwaves such that the three-dimensional article is heat treated in situ.

7. An additive manufacturing apparatus (200) for the creation of a three-dimensional article (260) comprising:
a. a build platform (210);
b. a particulate spreader (240) configured to move horizontally relative to the build platform (210);
c. a galvanometer (235) configured to guide a directed energy beam (230) used to form a three-dimensional article toward the build platform (210); and
d. a microwave emitter (250) positioned above the build platform (210), wherein the microwave emitter (250) is configured to emit microwaves having wavelengths sufficient to couple with a particulate material.

8. The apparatus (200) of claim 7 or 14, further comprising a particulate material bed constructed of at least one layer of particulate material deposited by the particulate spreader (240).

9. The apparatus (200) of claim 7, 8 or 14, wherein the build platform (210) is configured to be raised or lowered through a piston (215) positioned below and attached to the build platform (210).

10. The apparatus (200) of claim 7, 8, 9 or 14, wherein the particulate spreader (240) comprises one or more of a singular wiper, a singular roller, system of multiple rollers, or a system of multiple wipers.

11. The apparatus (200) of claim 7, 8, 9, 10 or 14, wherein the microwave emitter (250) is configured to irradiate at least a portion of a particulate material.

12. The apparatus (200) of claim 7, 8, 9, 10, 11 or 14, wherein the microwave emitter (250) produces microwaves having wavelengths sufficient to maintain a predetermined temperature of a particulate material sufficient to reduce residual stresses in the three-dimensional article (260).

13. The apparatus of claim 7, 8, 9, 10, 11, 12 or 14, wherein the microwave emitter (250) produces microwaves having wavelengths sufficient to heat treat the three-dimensional article in situ (260).

14. An additive manufacturing apparatus (200) for the creation of a three-dimensional article (260) comprising a build platform (210), a particulate spreader (240), a galvanometer (235), and a directed energy beam (230), wherein the improvement comprises the addition of a microwave emitter (250).

15. The method and apparatus as claimed in any of claims 1 to 14, wherein particulate material is selected from the group consisting of: a) a metallic, b) a ceramic, c) a doped plastic, or d) a combination thereof.
